# EUROPÄISCHE PATENTSCHRIFT

(11) **EP 3 380 373 B1**
(45) Veröffentlichungstag und Bekanntmachung des Hinweises auf die Patenterteilung: **11.09.2019**
(21) Anmeldenummer: 16797940.0
(22) Anmeldetag: 18.11.2016
(51) Int. Cl.: B60T 13/14

(54) **BREMSGERÄT FÜR EINE HYDRAULISCHE KRAFTFAHRZEUGBREMSANLAGE**
BRAKE DEVICE FOR VEHICLE HYDRAULIC BRAKE SYSTEM
DISPOSITIF DE FREIN POUR SYSTÈME DE FREINAGE HYDRAULIQUE D'UN VEHICULE

(30) Priorität: 23.11.2015 DE 102015223047
(43) Veröffentlichungstag der Anmeldung: 03.10.2018
(73) Patentinhaber: Continental Teves AG & Co. OHG, 60488 Frankfurt am Main (DE)
(72) Erfinder: PETZOLD, Falk, 60489 Frankfurt/M (DE); MESSNER, Adrian, 64285 Darmstadt (DE); RÜFFER, Manfred, 65843 Sulzbach (DE); JÜRGING, Michael, 65779 Kelkheim (DE)
(86) Internationale Anmeldenummer: PCT/EP2016/078115
(87) Internationale Veröffentlichungsnummer: WO 2017/089233

(56) Entgegenhaltungen:
- DE-A1-102006 040 424
- FR-A1- 2 574 357

## Beschreibung

Die Erfindung betrifft ein Bremsgerät für eine hydraulische Kraftfahrzeugbremsanlage mit einer hydraulischen Verstärkerstufe.

Ein Bremsgerät dieser Art ist aus FR 2574357 A bekannt. Bei stetig zunehmenden Anforderungen an ein automatisiertes, computergesteuertes Fahren und Bremsen und gleichzeitig knapper verfügbares Bauraum stoßen die groß bauenden Unterdruck-Bremskraftverstärker an ihre technischen Grenzen. Es ist daher bekannt, Bremsgeräte mit elektromechanisch angetriebenen hydraulischen Verstärkerstufen einzusetzen.

Derartige Verstärkerstufen müssen eine zuverlässige Funktion sowohl bei einem fremdangesteuerten beziehungsweise vollautonomen fahrerunabhängigen Betätigungsmodus als auch bei einem manuellen fahrerinitierten Betätigungsmodus als auch in einer Rückfallebene bei Fehlfunktionen der Verstärkerstufe oder ausgefallener Energieversorgung sicherstellen.

Zugleich besteht der Wunsch, die hydraulische Verstärkerstufe wahlweise anstatt eines Unterdruck-Bremskraftverstärkers unter Ausnutzung gleicher mechanischer Schnittstellen einzusetzen und eine mit dem Unterdruck-Bremskraftverstärker vergleichbare haptische Rückmeldung beziehungsweise Pedalgefühl zu erhalten. Bekannte gattungsgemäße Bremsgeräte sind meinst komplex mit elektrisch schaltbaren Ventileinrichtungen zur Implementierung unterschiedlicher Betätigungsmodi aufgebaut. Um die Mitnahme des Bremspedals bei einem autonomen Betätigungsfall sicherzustellen sind bei bekannten Bremsgeräten ebenfalls aufwändige technische Lösungen erforderlich.

Bekannte Bremsgeräte mit hydraulischen Verstärkerstufen, die schwere und teure Hochdruckspeicher als Druckquelle einsetzen werden wegen dem erhöhtem Gewicht, Bauraum- und Schaltaufwand als besonders verbesserungswürdig angesehen. Stellvertretend für eine derartige Technologie wird auf ein Aggregat gemäß FR 2 573 019 A1 verwiesen.

Es stellt sich somit eine Aufgabe, ein verbessertes Bremsgerät mit einer hydraulisch wirkenden Verstärkerstufe mit einem reduzierten Schaltaufwand zur Implementierung von fremdangesteuerten und manuellen Betätigungsmodi möglichst kosteneffizient anzubieten. Dabei sollen ein mit einem konventionellen Unterdruck-Bremskraftverstärker möglichst vergleichbares Komfort und Montageschnittstellen erhalten bleiben.

Die Aufgabe wird erfindungsgemäß durch ein Bremsgerät mit Merkmalskombination nach dem Anspruch 1 gelöst. Unteransprüche zusammen mit Figurenbeschreibungen geben weitere vorteilhafte Ausführungsformen und Weiterbildungen an.

Die hydraulische Verstärkerstufe des erfindungsgemäßen Bremsgeräts ist als ein hochdruckspeicherloser Umlaufverstärker ausgeführt und verfügt über zwei gesonderte, funktional getrennte Kolben, von denen jeweils ein Kolben - der Druckraumkolben - bei der Erzeugung von Verstärkungskraft in einem autonomen und der andere Kolben - der Zwischenraumkolben - in manuellen Betätigungsmodus primär wirksam ist. Die Wirkumschaltung zwischen den Kolben kann dabei besonders einfach zwangsweise druckgesteuert und zugleich mechanisch durch eine geeignete Anordnung von Hydraulikpassagen in einer relativ zu den Kolben verschiebbaren Kolbenstange und/oder einem der Kolben erfolgen. Auf gesonderte elektrische oder elektromagnetische Ventilschalteinrichtungen mit dem eigens benötigten Steuersystem kann verzichtet werden.

Durch den Einsatz von zwei Kolben, insbesondere in Verbindung mit dem Einsatz eines Drucksensors zur Messung von Druck in der Verstärkerstufe lässt sich das Bremsgerät zuverlässig fremdansteuern. Die funktionale Trennung auf einen Druckraumkolben und Zwischenraumkolben ermöglicht außerdem eine Vereinfachte Pedalmitnahme im Falle der autonomen Betätigung, indem eine zwangsweise Kopplung zwischen der Kolbenstange und dem autonomen Betätigungsmodus zugeordneten Druckraumkolben vorgesehen wird.

Vorzugsweise kann diese Kopplung über ein einfaches ringförmiges, metallisches Anschlagelement der auf der Kolbenstange befestigt ist, erfolgen.

Das erfindungsgemäße Bremsgerät zeichnet sich durch seine besonders einfache und robuste Bauweise aus. Es lässt sich zudem modular aufbauen, mit unterschiedlichen Hauptbremszylindern, Motorpumpeneinheiten und nachgeschalteten Modulatoreinheiten kombinieren und an bereits vorhandenen Befestigungsschnittstellen im Fahrzeug einsetzten, auch im Austausch mit Unterdruck-Bremskraftverstärkern. Hierdurch können vielfältige kundenspezifische Charakteristika mit Variationen des erfindungsgemäßen Bremsgeräts abgebildet und seine Integration in bestehende Systeme vereinfacht werden.

Weitere Merkmale und Vorteile der Erfindung ergeben sich aus der nachfolgenden Beschreibung mehrerer erfindungsgemäßer Ausführungsbeispiele und den Zeichnungen. Komponenten und Merkmale unterschiedlicher Ausführungsformen mit gleichen Funktionen werden hierbei vorzugsweise mit gleichen Bezugszeichen versehen. Nachstehend zeigt:
Fig.1 eine erfindungsgemäße Ausführungsform des Bremsgeräts in zwei Außenansichten.
Fig.2 eine vereinfachte Darstellung einer ersten erfindungsgemäßen Ausführungsform in Axialschnitt.
Fig.3 eine zweite erfindungsgemäßen Ausführungsform in Axialschnitt in Lösestellung beziehungsweise unbestätigter Ausgangsstellung.
Fig.4 die Ausführungsform nach Fig.3 in einem aktiven beziehungsweise autonomen Betätigungsmodus.
Fig.5 die Ausführungsform nach Fig.3 in einem passiven beziehungsweise manuellen Betätigungsmodus bei Teilbremsung.
Fig.6 die Ausführungsform nach Fig.3 in einem passiven beziehungsweise manuellen Betätigungsmodus bei einer intensiven Vollbremsung.

### Fig.1:

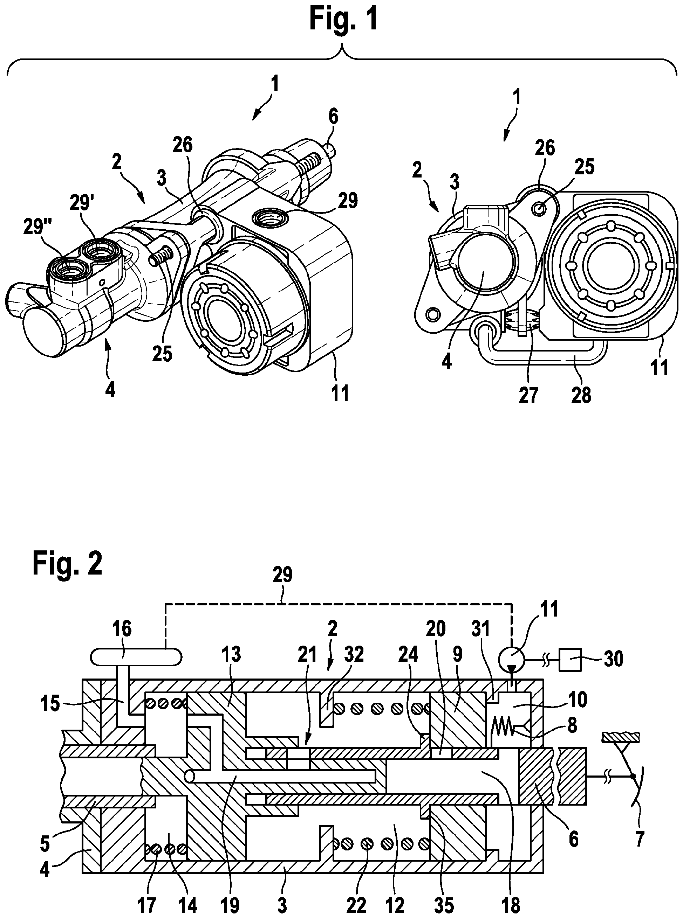

Eine Ausführungsform des erfindungsgemäßen Bremsgeräts 1 ist in den Fig.1 in Außenansichten (räumlich und Frontansicht) dargestellt. Das Bremsgerät 1 ist modular aufgebaut und umfasst im Wesentlichen eine hydraulische Verstärkerstufe 2 mit einem Verstärkergehäuse 3, einen Hauptbremszylinder 4 und eine elektrisch angetriebene Motorpumpeneinheit 11
Die Verstärkerstufe 2 wird über eine axial verschiebbare Kolbenstange 6 von einem hier nicht gezeigten Bremspedal 7 gegebenenfalls unter Zwischenschaltung von weiteren üblichen, hier nicht gezeigten mechanischen Komponenten, betätigt.

Die elektromotorisch angetriebene Motorpumpeneinheit 11 ist schwenkbar am Befestigungsbolzen 25 in einem elastischen Radialdämpfer 26 gelagert und unter Zwischenschaltung eines Axialdämpfers 27 gegen eine Befestigungsstelle am Verstärkergehäuse 3 gestützt und fixiert. Hierdurch werden Drehmomente der Motorpumpeneinheit 11 schwingungstechnisch optimal aufgenommen und isoliert.

Der Befestigungsbolzen 25 in der gezeigten Ausführungsform weist an beiden Enden ein Gewinde zu Montage einer Gewindemutter auf und dient zugleich zur Montage des Hauptbremszylinders 4 am Verstärkergehäuse 3 und zur Befestigung des gesamten Bremsgeräts 1 an einem nicht gezeigten karosseriefesten Fahrzeugteil wie beispielsweise einer Spritzwand im Motorraum.

Die Schnittstelle ist dabei vorzugsweise unifiziert mit weiteren Typen von Bremsgeräten ausgeführt - beispielsweise mit einem pneumatischen Bremskraftverstärker, wodurch ein Einsatz unterschiedlicher Bremsgerättypen am gleichen Fahrzeugtyp realisierbar ist.

Über die Behälteranschlüsse 29,29',29" wird der Hauptbremszylinder 4 und die Motorpumpeneinheit 11 von vorzugsweise einem einzelnen, gemeinsamen, in der Abbildung nicht dargestellten Druckmittelbehälter 16 gespeist. Ein Einsatz von mehreren separaten Druckmittelbehältern ist innerhalb der Erfindung jedoch jederzeit zulässig.

Über eine Hydraulikverbindung 28 wird das Druckmittel bei Bedarf im Bremsfall von der Motorpumpeneinheit 11 unmittelbar, unter Verzicht auf einen zwischengeschalteten Hochdruckspeicher der Verstärkerstufe 2 zugefügt, wo es sofort, "on demand", zur Aufbau einer auf den Hauptbremszylinder 4 einwirkenden Verstärkungskraft eingesetzt werden kann. Somit funktioniert die erfindungsgemäße Verstärkerstufe nach einem Umlaufprinzip beziehungsweise als ein Umlaufverstärker.

### Fig.2:

In der Fig.2 ist die Verstärkerstufe 2 einer ersten Ausführungsform des Bremsgeräts 1 stark vereinfacht im Axialschnitt dargestellt. In dem Verstärkergehäuse 3, an seinem dem Hauptbremszylinder 4 entgegengesetzten Ende ist ein Druckraum 10 angeordnet. Der Druckraum 10 ist von einem im Verstärkergehäuse 3 axial verschiebbar aufgenommenen Druckraumkolben 9 begrenzt.

Der Druckraumkolben 9 ist axial zwischen zwei Verstärkergehäusefesten Anschlägen 31,32 angeordnet. In seiner unbetätigten Ausgangsstellung liegt der Druckraumkolben 9 an dem ersten, druckraumseitigen Anschlag 31 an, dabei ist eine Zwischenfeder 22 zwischen dem Druckraumkolben 9 und dem zweiten, hauptzylinderseitigem Anschlag 32 eingespannt.

Die durch das Bremspedal 7 betätigbare und daran gekoppelte Kolbenstange 6 durchdringt mittig den Druckraumkolben 9 und ist relativ zu diesem axial verschiebbar Die axiale Verschiebung des Druckraumkolbens 9 relativ zu Kolbenstange 6 in Richtung Hauptbremszylinder 4 ist durch ein Anschlagelement 24 an der Kolbenstange begrenzt.

Im autonomen Betätigungsmodus wird der Druckraum 10 durch eine mittels einer elektronischen Steuereinheit 30 gesteuerten Motorpumpeneinheit 11 mit hydraulischem Druckmittel versorgt, so dass darin Überdruck entsteht. Eine Ausweitung des Überdruckes auf einen, durch den Druckraumkolben 9 vom Druckraum 10 getrennten, Zwischenraum 12 wird mit Hilfe eines axialen Dichtelements 31 verhindert. Das Dichtelement 31 kann dabei innerhalb der Erfindung sowohl am Druckraumkolben 9 als auch dem Anschlagelement 24 angebracht sein.

Der Druckunterschied zwischen den beiden Seiten des **Druckraumkolbens** 9 setzt diesen in Bewegung. Durch das Anschlagelement 24 wird die Kolbenstange 6 (unter Mitnahme des Bremspedals 7) mitgeschleppt und überträgt die aufgrund des Überdrucks im Druckraum 10 entstandene Verstärkungskraft auf den Zwischenraumkolben 13, welcher diese seinerseits an den Bremszylinderkolben 5 im Hauptbremszylinder 4 vermittelt. Durch die daraus resultierende Verschiebung des Bremszylinderkolbens 5 wird im Hauptbremszylinder 4 Bremsdruck erzeugt.

In der Kolbenstange 6 ist eine erste Hydraulikpassage 18 angeordnet. Diese stellt im Wesentlichen einen Kanal oder Bohrung innerhalb der Kolbenstange 6 die sich mit axial zueinander beanstandeten Öffnungen an der radialen Oberfläche der Kolbenstange 6 münden.

Wird im weiteren Bremsverlauf oder grundsätzlich das Bremspedal 7 durch den Fahrer betätigt (manueller beziehungsweise passiver Betätigungsmodus), wird die Kolbenstange 6 relativ zum Druckraumkolben 9 in Richtung Hauptbremszylinder 4 verschoben, so dass sich die zwischenraumseitige Öffnung der ersten Hydraulikpassage 18 - die erste Steueröffnung 20 öffnet.

Dies führt zu einem Einströmen des hydraulischen Druckmittels aus dem Druckraum 10 in den Zwischenraum 12 und letztlich einem Druckausgleich zwischen den beiden Räumen. Die weitere Verstärkungskraft wird nun von dem Zwischenraumkolben 13 erzeugt.

Die Zwischenfeder 22 wird benötigt, wenn im aktiver Betätigungsfall der Fahrer eingreift und die Bremsung beeinflussen möchte. Er übertritt in diesem Fall durch das Verschieben der Kolbenstange 6 die aktiv beziehungsweise autonom herbeigeführte Position des Druckkolbens 9, öffnet die erste Steueröffnung 20 wodurch ein Druckausgleich stattfindet und der Druckkolben 9 in seine hintere unbetätigte Ausgangslag zurückgestellt wird.

In einer nicht gezeigten erfindungsgemäßen Ausführungsform kann auf die Zwischenfeder 22 verzichtet werden, wodurch die das Verstärkergehäuse 3 axial kürzer gebaut werden kann. Die Rückstellung des Druckraumkolbens 9 erfolgt in dem Fall durch das Anschlagelement 24 auf der Kolbenstange 6 nach Beendigung des Bremsvorgangs. Eine Verstärkung der Bremskraft durch den Fahrerwunsch wird dennoch immer mit dem Zwischenraumkolben 13 erreicht und im autonomen Betätigungsmodus mit dem Druckraumkolben 9.

Die Sensoreinrichtung 8 registriert die Positionsänderung der Kolbenstange 6 insbesondere bei Pedalbetätigung. Die gewonnene Information wird zur elektronischen Steuerung der Motorpumpeneinheit 11 verwendet, beispielsweise um ein Anlaufen bei Betätigung des Bremspedals 7 oder ein Anhalten bei einer Rückwärtigen Bewegung der Kolbenstange 6 nach einem Bremsvorgang zu initiieren.

In der gezeigten Ausführung ist in dem Zwischenraumkolben 13 eine zweite Hydraulikpassage 19 angeordnet. Diese ermöglicht eine hydraulische Verbindung zwischen der Zwischenraum 12 und einer im Wesentlichen stätig drucklosen Rücklaufkammer 14, welche ihrerseits über die Rücklaufverbindung 15 mit dem drucklosen Druckmittelbehälter 16 in Verbindung steht. Eine der zweiten Hydraulikpassage 19 zugeordnete zweite Steueröffnung 21 kann durch eine axiale Relativverschiebung zwischen der Kolbenstange 6 und dem Zwischenraumkolben 13 geöffnet oder geschlossen werden. Bei einer regulären Bremsung wird die zweite Steueröffnung 21 durch die Verschiebung der Kolbenstange 6 alleine oder zusammen mit dem Druckraumkolben 9 vollständig (Vollbremsung) oder teilweise (Teilbremsung) geschlossen, so dass kein oder nur ein geringer definierter Druckmittelstrom aus dem Zwischenraum 12 in die Rücklaufkammer 14 entweichen kann.

Hauptbremszylinderseitig ist in dem Verstärkergehäuse 3 eine Rückstellfeder 17 gegen den Zwischenraumkolben 13 verspannt angebracht, die bei einem Bremsvorgang durch die Verschiebung des Zwischenraumkolbens 13 zwangsweise vorspannt wird.

Nach dem Bremsvorgang wird die Motorpumpeneinheit 11 angehalten, die Kolbenstange 6 und der Druckraumkolben 9 zurückversetzt so dass die Steueröffnung 21 vollständig geöffnet wird und das Druckmittel aus dem Zwischenraum 12 durch die Hydraulikpassage 19 in die Rücklaufkammer 14 und von dort durch die Rücklaufverbindung 15 in den Druckmittelbehälter 16 gelangt, aus dem es bei Bedarf über den Behälteranschluss 29 wieder der Motorpumpeneinheit 11 zugefügt wird.

Gleichzeitig versetzt die Rückstellfeder 17 den Zwischenraumkolben 13 in seine unbetätigte Ausgangsstellung in Anschlag mit dem insbesondere zur Abstützung der Zwischenfeder 22 vorgesehenen Anschlagelement 32, oder einem hier nicht dargestellten gesonderten zusätzlichen Anschlagelement. Ein hinterer Anschlag für den Zwischenraumkolben 13 ist notwendig, da sonst die Rückstellfeder 17 im Rücklaufraum 14 ungefesselt wäre und sich undefiniert verschieben würde.

### Fig.3:

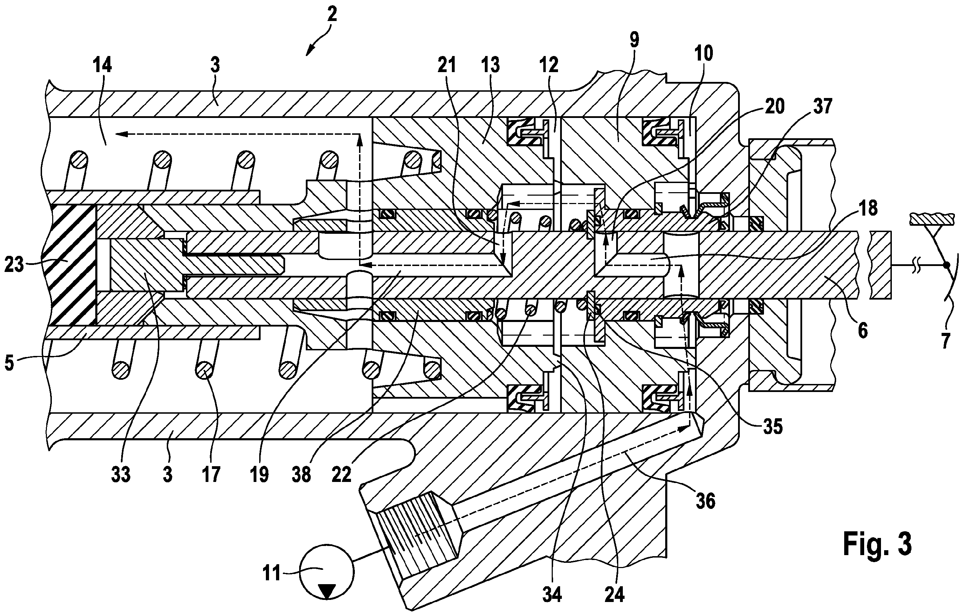

Die Figuren 3 - 6 zeigen eine andere erfindungsgemäße Ausführungsform des Bremsgeräts 1 in unterschiedlichen Betriebsbeziehungsweise Betätigungsmodi.

In der Fig. 3 ist die unbetätigte Ausgangstellung abgebildet. Im Unterschied zu der Ausführungsform nach Fig.2 ist die Kolbenstange 6 in einer axialen Durchgangsbohrung im Zwischenraumkolben 13 aufgenommen, so dass sie diesen - beispielsweise bei einer Vollbremsung oder einer Bremsung in der Rückfallebene vollständig durchdrungen kann.

Des Weiteren ist der Zwischenraumkolben 13 axial zwischen der Rückstellfeder 17 und der Zwischenfeder (22) eingespannt angeordnet. Die Rückstellfeder 17 stützt sich an einem (nicht gezeigten) verstärkergehäusefesten Anschlag und wirkt auf den Zwischenraumkolben 13 axial in Richtung Druckraumkolben 9 ein, wogegen sich die Zwischenfeder 22 an einem kolbenstangenfesten Anschlagelement 24 abstützt und auf den Zwischenraumkolben 13 axial in Richtung Hauptbremszylinder 4 einwirkt.

In der gezeigten unbetätigten Ausgangslage stützt sich der Zwischenraumkolben 13 unmittelbar gegen den Druckraumkolben 9. Um eine vollflächige Auflage der beiden Kolben aneinander zu vermeiden und eine sichere Benetzung derer Stirnflächen mit Druckmittel im Zwischenraum 12 sicherzustellen sind umfänglich verteilte Abstandsvorsprünge 34 vorgesehen.

Beide Hydraulikpassagen 18 und 19 sind in der Kolbenstange 6 axial zueinander beanstandet angeordnet. Das Anschlagelement 24 ermöglicht neben der Abstützung der Zwischenfeder 22 zusätzlich das Mitschleppen der Kolbenstange durch den Druckraumkolben 9 beim autonomen Betätigungsmodus. Zugleich ist zwischen dem Anschlagelement 24 und dem Druckraumkolben 9 eine Axialdichtung 35 angeordnet, welche den Durchfluss durch die erste Steueröffnung 20 unterbindet und so einen Volumentransfer zwischen dem Druckraum 10 und dem Zwischenraum 12 verhindert.

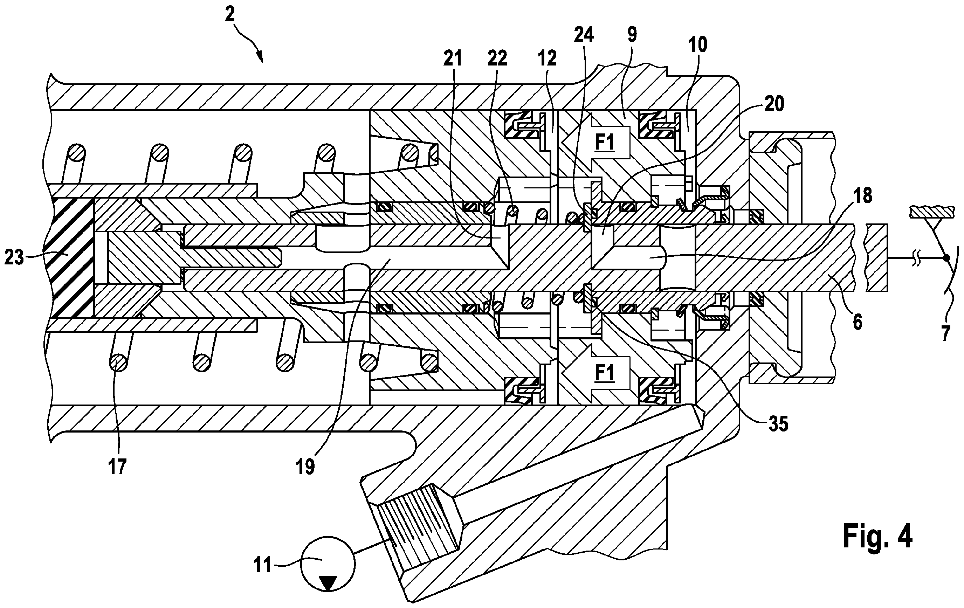

Der Linienzug 36 verdeutlicht prinzipiell und grundsätzlich den Druckmittelkreislauf durch die Verstärkerstufe 2. Auf die Auf die speziell für verschiedene Betätigungsmodi geltenden Besonderheiten wird in den Fig.4-6 eingegangen.

Aus der Motorpumpeneinheit 11 gelang das Druckmittel durch einen Kanal im Verstärkergehäuse 3 in den Druckraum 10. Von dort durch die erste Hydraulikpassage 18 und die erste Steueröffnung 20 in den Zwischenraum 12. Aus dem Zwischenraum 12 fließt das Druckmittel durch die zweite Steueröffnung 21 und die zweite Hydraulikpassage 19 in die Rücklaufkammer 14, aus der es über nicht gezeigte Rücklaufverbindung 15 äquivalent zu Fig.2 in den Druckmittelbehälter 16 und von dort wieder der Motorpumpeneinheit 11 zugeführt wird.

Zwischen der Kolbenstange 6 und den Zwischenraumkolben 13 einerseits und dem Bremszylinderkolben 5 andererseits ist ein elastisches Reaktionselement 23 zwischengeschaltet. Durch die Kolbenstange 6 wird die unverstärkte Betätigungskraft vom Bremspedal 7 und die Verstärkungskraft vom Zwischenraumkolben 13 in das Reaktionselement 23 und von dort unter Bildung einer Hysterese in den Bremszylinderkolben 5 eingeleitet. Gleichzeitig leitet das Reaktionselement 23 eine Reaktionskraft in die Kolbenstange 6 ein, die im Wesentlichen als haptische Rückmeldung beziehungsweise ein charakteristisches Pedalgefühl am Bremspedal 7 vom Fahrer registriert wird.

In das reaktionselementseitige Ende der Kolbenstange 6 ist ein druckstabiles Übersetzungsstück 33 eingesetzt. Das Übersetzungsstück 33 definiert über seine Kontaktfläche mit dem Reaktionselement 23 die wirksame Fläche zur Übertragung von Kräften zwischen der Kolbenstange 6 und Reaktionselement 23 und somit auch die als haptische Rückmeldung am Bremspedal 7 empfundene Reaktionskraft. Der axiale Abstand zwischen dem Übersetzungsstück 33 und dem Reaktionselement 23 beeinflusst im Wesentlichen den fühlbaren Leerweg am Bremspedal 7. Durch Variationen von Durchmessern und Längen des Übersetzungsstücks 33 kann so das Ansprechverhalten des Bremsgeräts 1 konstruktiv gesteuert werden.

Für eine besonders einfache kundenspezifische Anpassung des Ansprechverhaltens und eine exakte Schaltbarkeit der Verstärkerstufe 2 sind in der hier gezeigten bevorzugten Ausführung gesonderte erste und zweite Steuerhülsen 37,38 vorgesehen. Die Steuerhülsen 37,38 umgreifen jeweils radial die Kolbenstange 6 so dass die erste Steueröffnung 20 zwischen der Kolbenstange 6 und der ersten Steuerhülse 37 und die zweite Steueröffnung 21 entsprechend zwischen der Kolbenstange 6 und der zweiten Steuerhülse 38 wirken. Damit einhergehend können die Schaltpunkte besonders exakt und mit einem minimierten herstelltechnischen Aufwand kundenspezifisch an unterschiedliche Bremsgeräte angepasst werden. Hierdurch ist es beispielsweise möglich, eine definierte Paarung Kolbenstange 6 mit Steuerhülsen 37,38 in Kombination mit unterschiedlichen Druckraumkolben 9 und Zwischenraumkolben 13 zu verwenden und so kostengünstig ein definiertes Ansprech- und Schaltverhalten bei verschiedenen kundenspezifischen Applikationen des Bremsgeräts 1 einzuhalten.

Vorzugsweise sind die Steuerhülsen 37,38 aus einem verschleißfesten und maßhaltigen Werkstoff wie Metall gefertigt. Dadurch wird es möglich, den wesentlich größeren Druckraumkolben 9 und Zwischenraumkolben 13 gewichts- kosten- und herstelltechnisch optimiert aus einem leichten und einfach formbaren Werkstoff wie beispielsweise Kunststoff zu erzeugen. Durch die geringeren bewegten Massen wird auch die Dynamik des Bremsgeräts 1 verbessert.

### Fig.4:

Fig.4 zeigt die Verstärkerstufe 2 in einem aktiven beziehungsweise autonomen Betätigungsmodus. Die Kolbenstange 6 bleibt dabei unbetätigt. Die Motorpumpeneinheit 11 pumpt elektronisch gesteuert das Druckmittel unter hohem Druck in den Druckraum 10. Der Druckraumkolben 9 wird gegen das Anschlagelement Die Axialdichtung 35 verhindert das Abfließen des Druckmittels in den Zwischenraum 12, so dass im Druckraum 10 ein auf die Stirnfläche des Druckraumkolbens 9 wirkender hoher hydraulische Druck aufgebaut wird. Die daraus resultierende Verstärkungskraft F1 wird vom Druckraumkolben 9 mechanisch an den Zwischenraumkolben 13 und weiter zum Bremszylinderkolben 5 übertragen. Der Druckraumkolben 9 bewegt sich dabei zusammen mit dem Zwischenraumkolben 13 in Richtung Hauptbremszylinder 4, die Kolbenstange 6 wird durch das Anschlagelement 24 vom Druckraumkolben 9 mitgeschleppt.

### Fig.5:

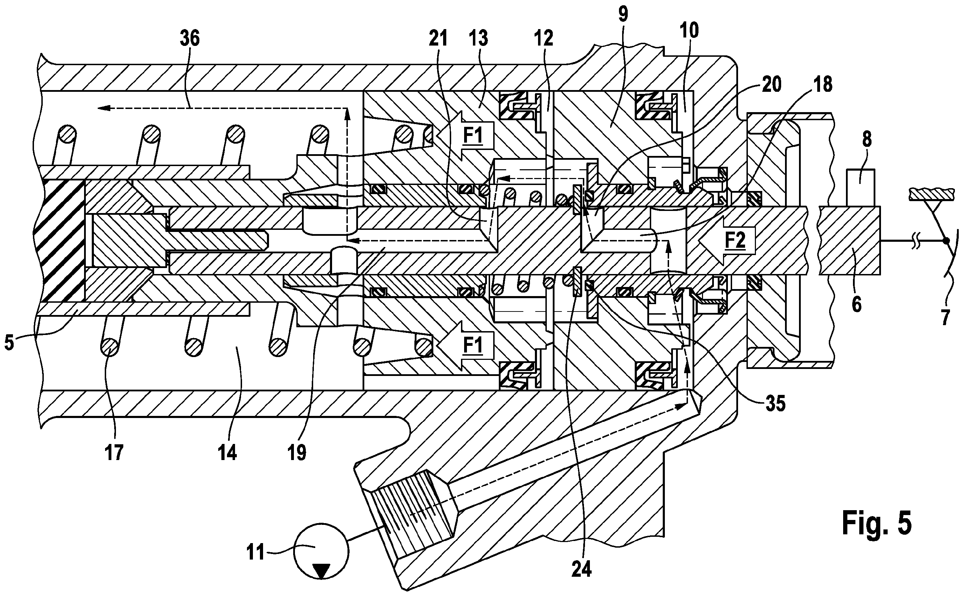

Fig.5 zeigt die Verstärkerstufe 2 in einem passiven beziehungsweise manuellen Betätigungsmodus bei einer fahrerinitiierten, moderaten Teilbremsung.

Der Fahrer betätigt durch das Bremspedal 7 die Kolbenstange 6. Eine Sensoreinrichtung 8 registriert den Bremswunsch, welcher durch eine nicht gezeigte elektronische Steuereinheit in einen Steuerbefehl an die Motorpumpeneinheit 11 umgewandelt wird, das Druckmittel unter hohem Druck in den Druckraum 10 zu fördern. Durch die Fusskraft der Fahrers F2 wird die Kolbenstange 6 relativ zum Druckraumkolben 9 verschoben, so dass die erste Steueröffnung 20 geöffnet wird und ein Druckausgleich zwischen dem Druckraum 10 und dem Zwischenraum 12 stattfindet. Der hydraulische Druck wirkt nun unmittelbar auf die Stirnfläche des Zwischenraumkolbens 13, so dass dieser mit der Verstärkungskraft F1 in Richtung Bremszylinderkolben 5 verschoben wird und die Verstärkungskraft F1 an diesen weiterleitet.

Die zweite Steueröffnung 21 wird dabei jedoch nicht vollständig geschlossen, sondern der Durchfluss durch diese lediglich definiert reduziert. Ein so durch die Bewegung der Kolbenstange 6 steuerbarer Teil des Druckmittels entweicht stätig aus dem Zwischenraum 12 in die Rücklaufkammer 14 und folgt dem vorstehend beschriebenen Druckmittelkreislauf 36. Somit ein Kräftegleichgewicht zwischen dem Zwischenraumkolben 13 und dem Bremszylinderkolben 5 einfach und ohne gesonderte speziell Regelung eingestellt werden. Des Weiteren kann dadurch ein besonders komfortables und mit einem Unterdruck-Bremskraftverstärker vergleichbares Ansprechverhalten des Bremsgeräts 1 erreicht und die Steuerung der Motorpumpeneinheit 11 in Bezug auf die Regulierung der Fördermenge erheblich vereinfacht werden.

### Fig.6:

In der Fig. ist die Verstärkerstufe 2 ebenfalls in einem passiven beziehungsweise manuellen Betätigungsmodus, jedoch bei einer Vollbremsung dargestellt. Im Unterschied zu der vorstehend in der Fig.5 beschriebenen Situation betätigt der Fahrer das Bremspedal 7 und die Kolbenstange 6 mit einer wesentlich größeren Fusskraft F2.

Dadurch wird die erste Steueröffnung 20 vollständig geöffnet und die zweite Steueröffnung 21 vollständig geschlossen. Die hydraulische Verbindung aus dem Zwischenraum 12 in die Rücklaufkammer 14 ist nun gänzlich unterbunden und der hydraulische Druck in dem Zwischenraum 12 kann seinen technischen Maximalwert erreichen und unmittelbar auf den Zwischenraumkolben 13 einwirken. Dadurch kann die größtmögliche Verstärkungskraft F1 erzeugt werden, die zudem durch die aufaddierte Fusskraft F2 zusätzlich unterstützt ist.

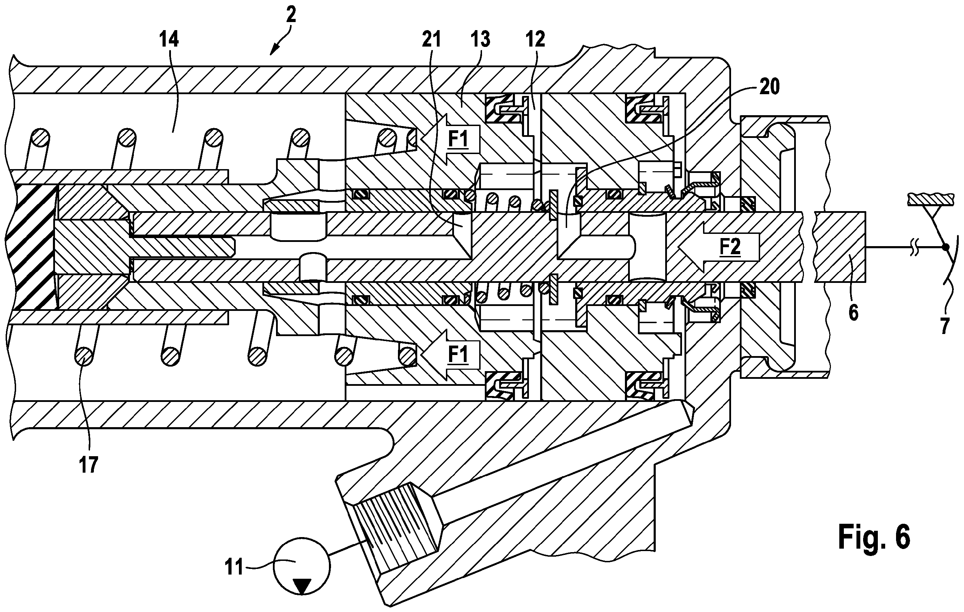

Der Druckraumkolben 9 bleibt bei einem passiven Betätigungsmodus gemäß den Fig. 5 und 6 an der Erzeugung der Verstärkungskraft F1 unbeteiligt und verbleibt im Wesentlichen unbewegt in seiner unbetätigten Ausgangslage.

### Bezugszeichen:

- 1: Bremsgerät
- 2: Verstärkerstufe
- 3: Verstärkergehäuse
- 4: Hauptbremszylinder
- 5: Bremszylinderkolben
- 6: Kolbenstange
- 7: Bremspedal
- 8: Sensoreinrichtung
- 9: Druckraumkolben
- 10: Druckraum
- 11: Motorpumpeneinheit
- 12: Zwischenraum
- 13: Zwischenraumkolben
- 14: Rücklaufkammer
- 15: Rücklaufverbindung
- 16: Druckmittelbehälter
- 17: Rückstellfeder
- 18: Hydraulikpassage
- 19: Hydraulikpassage
- 20: Steueröffnung
- 21: Steueröffnung
- 22: Zwischenfeder
- 23: Reaktionselement
- 24: Anschlagelement
- 25: Befestigungsbolzen
- 26: Radialdämpfer
- 27: Axialdämpfer
- 28: Hydraulikverbindung
- 29: Behälteranschluss
- 30: Elektronische Steuereinheit
- 31: Anschlag
- 32: Anschlag
- 33: Übersetzungsstück
- 34: Abstandsvorsprung
- 35: Axialdichtung
- 36: Druckmittelkreislauf
- 37: Steuerhülse
- 38: Steuerhülse

## Patentansprüche

1. Bremsgerät (1) für eine hydraulische Kraftfahrzeugbremsanlage, umfassend eine hydraulische Verstärkerstufe (2) und einem Hauptbremszylinder (4) mit einem axial verschiebbaren Bremszylinderkolben (5), wobei das Bremsgerät (1) innerhalb eines regulären Verstärkungsbetriebs sowohl in einem autonomen fahrerunabhängigen Betätigungsmodus elektronisch gesteuert als auch in einem manuellen Betätigungsmodus durch den Fahrer gesteuert und außerhalb des regulären Verstärkungsbetriebs in einem Notfallmodus mit einer alleine durch den Fahrer erzeugten unverstärkten Betätigungskraft betrieben werden kann, und die Verstärkerstufe (2) dergestalt konfiguriert ist, dass innerhalb des regulären Verstärkungsbetriebs jedem Betätigungsmodus ein gesonderter Kolben (9,13) in einem Verstärkergehäuse (3) der Verstärkerstufe (2) zugeordnet ist, der unmittelbar mit der Verstärkungskraft beaufschlagt wird und diese mechanisch an wirkungsmäßig nachgeschalteten Komponenten vermittelt, **dadurch gekennzeichnet, dass** in dem Verstärkergehäuse (3) ein Druckraum (10), der unmittelbar aus einer elektromotorischen Motorpumpeneinheit (11) mit Druckmittel gespeist wird, ein Zwischenraum (12), der aus dem Druckraum (10) mit Druckmittel gespeist wird und eine im Wesentlichen drucklose Rücklaufkammer (14), die aus dem Zwischenraum (12) mit dem Druckmittel gespeist wird sowie über eine Rücklaufverbindung (15) mit einem drucklosen Druckmittelbehälter (16) verbunden ist, eingerichtet sind, wobei ein axial verschiebbarer Druckraumkolben (9) den Druckraum (10) von dem Zwischenraum (12) und ein axial verschiebbarer Zwischenraumkolben (13) den Zwischenraum (12) von der Rücklaufkammer (14) trennen..

2. Bremsgerät (1) nach Anspruch 1 **dadurch gekennzeichnet, dass** in der Verstärkerstufe (2) eine Kolbenstange (6) axial verschiebbar aufgenommen ist, die zur Übertragung einer Betätigungskraft von einem Bremspedal (7) auf den Bremszylinderkolben (5), eingerichtet ist und eine Sensoreinrichtung (8) zur direkten oder indirekten Überwachung der axialen Position der Kolbenstange (6) vorgesehen ist.

3. Bremsgerät (1) nach Anspruch 1 **dadurch gekennzeichnet, dass** der Zwischenraumkolben (13) mit einer Verstärkungskraft auf den Bremszylinderkolben (5) einwirkt, wenn hydraulisches Druckmittel mit einem Verstärkungsdruck aus der Motorpumpeneinheit (11) in den Druckraum (10) gespeist ist.

4. Bremsgerät (1) nach Anspruch 1 **dadurch gekennzeichnet, dass** in dem autonomen fahrerunabhängigen Betätigungsmodus der Druckraumkolben (9) zur Übertragung der Verstärkungskraft mechanisch mit dem Zwischenraumkolben (13) gekoppelt vorgesehen ist und in dem manuellen Betätigungsmodus der Zwischenraumkolben (13) von dem Druckraumkolben (9) mechanisch entkoppelt ist und die Verstärkungskraft aus dem Zwischenraum (12) hydraulisch auf den Zwischenraumkolben (13) wirkt.

5. Bremsgerät (1) nach Anspruch 2 **dadurch gekennzeichnet, dass** die Kolbenstange (6) axial wenigstens abschnittsweise in dem Druckraumkolben (9) und dem Zwischenraumkolben (13) angeordnet ist.

6. Bremsgerät (1) nach Anspruch 2 **dadurch gekennzeichnet, dass** in der Kolbenstange (6) wenigstens eine erste Hydraulikpassage (18) vorgesehen ist, die sich bereichsweise axial durch die Kolbenstange (6) erstreckt und mit wenigstens zwei axial zueinander beabstandeten Öffnungen in die radiale Oberfläche der Kolbenstange (6) mündet.

7. Bremsgerät (1) nach Anspruch 2 **dadurch gekennzeichnet, dass** in der Kolbenstange (6) eine erste Hydraulikpassage (18) und eine zweite Hydraulikpassage (19) angeordnet sind, die axial zueinander beanstandet sich bereichsweise axial durch die Kolbenstange (6) erstrecken und mit jeweils wenigstens zwei axial zueinander beabstandeten Öffnungen in die radiale Oberfläche der Kolbenstange (6) münden.

8. Bremsgerät (1) nach Anspruch 6 oder 7 **dadurch gekennzeichnet, dass** eine zwischenraumseitige Öffnung der ersten Hydraulikpassage (18) als eine erste Steueröffnung (20) zu Steuerung einer hydraulischen Verbindung zwischen dem Druckraum (10) und dem Zwischenraum (12) durch die erste Hydraulikpassage (18) vorgesehen ist.

9. Bremsgerät (1) nach Anspruch 7 **dadurch gekennzeichnet, dass** eine druckraumseitige Öffnung der zweiten Hydraulikpassage (19) als eine zweite Steueröffnung (21) zu Steuerung einer hydraulischen Verbindung zwischen dem Zwischenraum (12) und der Rücklaufkammer (14) durch die zweite Hydraulikpassage (19) vorgesehen ist.

10. Bremsgerät (1) nach Anspruch 1 **dadurch gekennzeichnet, dass** der Zwischenraumkolben (13) axial zwischen zwei Federelementen eingespannt angeordnet ist.

11. Bremsgerät (1) nach Anspruch 10 **dadurch gekennzeichnet, dass** der Zwischenraumkolben (13) in seiner unbetätigten Ausgangsstellung durch eine Rückstellfeder (17),welche bei einem Bremsvorgang zwangsweise vorspannt wird, gegen den Druckraumkolben (9) oder einen verstärkergehäusefesten Anschlag gepresst ist.

12. Bremsgerät (1) nach Anspruch 2 **dadurch gekennzeichnet, dass** zwischen dem Bremszylinderkolben (5) und der Kolbenstange (6) ein elastisches Reaktionselement (23) wirkungsmäßig zwischengeschaltet ist, welches bei der manuellen Betätigung komprimiert und unter Bildung einer Hysterese eine Reaktionskraft als eine haptische Rückmeldung durch die Kolbenstange (6) in ein Bremspedal (7) einbringt.

13. Bremsgerät (1) nach Anspruch 2 **dadurch gekennzeichnet, dass** an der Kolbenstange (6) ein Anschlagelement (24) angeordnet ist, welches eine axiale Verschiebung des Druckraumkolbens (9) in Richtung Zwischenraum (12) relativ zur Kolbenstange (6) begrenzt.

## Claims

1. Brake device (1) for a hydraulic motor vehicle brake system, comprising a hydraulic booster stage (2) and a master brake cylinder (4) with an axially displaceable brake cylinder piston (5), wherein the brake device (1), within normal boosting operation, can be operated both in an autonomous, driver-independent actuation mode in an electronically controlled manner and in a manual actuation mode in a manner controlled by the driver, and outside the normal boosting operation, can be operated in an emergency mode with an un-boosted actuation force generated by the driver alone, and the booster stage (2) is configured such that within the normal boosting operation, each actuation mode is assigned a separate piston (9, 13) in a booster housing (3) of the booster stage (2), which piston is acted on directly by the boost force and transmits this mechanically to components connected operatively downstream **characterized in that,** in the booster housing (3), there are formed a pressure space (10), which is fed with pressure medium directly from an electromotive motor-pump unit (11), an intermediate space (12), which is fed with pressure medium from the pressure space (10), and a substantially unpressurized return chamber (14), which is fed with the pressure medium from the intermediate space (12) and which is connected via a return connection (15) to an unpressurized pressure medium reservoir (16), wherein an axially displaceable pressure space piston (9) separates the pressure space (10) from the intermediate space (12), and an axially displaceable intermediate space piston (13) separates the intermediate space (12) from the return chamber (14).

2. Brake device (1) according to Claim 1, **characterized in that** a piston rod (6) is received in axially displaceable fashion in the booster stage (2), which piston rod is designed for transmitting an actuation force from a brake pedal (7) to the brake cylinder piston (5), and a sensor device (8) is provided for directly or indirectly monitoring the axial position of the piston rod (6).

3. Brake device (1) according to Claim 1, **characterized in that** the intermediate space piston (13) acts with a boost force on the brake cylinder piston (5) if hydraulic pressure medium is fed with a boost pressure from the motor-pump unit (11) into the pressure space (10).

4. Brake device (1) according to Claim 1, **characterized in that,** in the autonomous, driver-independent actuation mode, the pressure space piston (9) is provided so as to be mechanically coupled to the intermediate space piston (13) for transmission of the boost force, and in the manual actuation mode, the intermediate space piston (13) is mechanically decoupled from the pressure space piston (9) and the boost force from the intermediate space (12) acts hydraulically on the intermediate space piston (13).

5. Brake device (1) according to Claim 2, **characterized in that** the piston rod (6) is arranged axially at least in sections in the pressure space piston (9) and in the intermediate space piston (13).

6. Brake device (1) according to Claim 2, **characterized in that,** in the piston rod (6), there is provided at least one first hydraulic passage (18) which extends in regions axially through the piston rod (6) and which opens with at least two axially spaced-apart openings into the radial surface of the piston rod (6).

7. Brake device (1) according to Claim 2, **characterized in that,** in the piston rod (6), there are arranged a first hydraulic passage (18) and a second hydraulic passage (19) which, axially spaced apart from one another, extend in regions axially through the piston rod (6) and open with in each case at least two axially spaced-apart openings into the radial surface of the piston rod (6).

8. Brake device (1) according to Claim 6 or 7, **characterized in that** an opening of the first hydraulic passage (18) at the intermediate space side is provided as a first control opening (20) for the control of a hydraulic connection between the pressure space (10) and the intermediate space (12) through the first hydraulic passage (18).

9. Brake device (1) according to Claim 7, **characterized in that** an opening of the second hydraulic passage (19) at the pressure space side is provided as a second control opening (21) for the control of a hydraulic connection between the intermediate space (12) and the return chamber (14) through the second hydraulic passage (19).

10. Brake device (1) according to Claim 1, **characterized in that** the intermediate space piston (13) is arranged so as to be braced axially between two spring elements.

11. Brake device (1) according to Claim 10, **characterized in that** the intermediate space piston (13), in its non-actuated initial position, is pressed by a restoring spring (17), which is positively prestressed during a braking process, against the pressure space piston (9) or against an abutment fixed with respect to the booster housing.

12. Brake device (1) according to Claim 2, **characterized in that** an elastic reaction element (23) is operatively interposed between the brake cylinder piston (5) and the piston rod (6), which reaction element is compressed during the manual actuation and, with the formation of hysteresis, introduces a reaction force as haptic feedback through the piston rod (6) into a brake pedal (7) .

13. Brake device (1) according to Claim 2, **characterized in that,** on the piston rod (6), there is arranged an abutment element (24) which limits an axial displacement of the pressure space piston (9) relative to the piston rod (6) in the direction of the intermediate space (12).

## Revendications

1. Dispositif de frein (1) pour une installation hydraulique de frein de véhicule automobile, comprenant un étage d'amplificateur hydraulique (2) et un maître-cylindre de frein (4) avec un piston de cylindre de frein (5) déplaçable axialement, le dispositif de frein (1) pouvant être actionné dans le cas d'un mode d'amplification normal à la fois de manière commandée électroniquement dans un mode d'actionnement autonome indépendant du conducteur ainsi que de manière commandée par le conducteur dans un mode d'actionnement manuel et, en dehors du mode d'amplification normal, pouvant être actionné dans un mode d'urgence avec une force d'actionnement non amplifiée générée seulement par le conducteur, et l'étage d'amplificateur (2) étant configuré de telle sorte que dans le cas du mode d'amplification normal, un piston séparé (9, 13) dans un boîtier d'amplificateur (3) de l'étage d'amplification (2) soit associé à chaque mode d'actionnement, lequel est sollicité directement avec la force d'amplification et fournit celle-ci sous forme mécanique à des composants montés fonctionnellement en aval, **caractérisé en ce que** dans le boîtier d'amplificateur (3) sont disposés un espace de pression (10) qui est directement alimenté en fluide sous pression à partir d'une unité de pompe à moteur (11) à moteur électrique, un espace intermédiaire (12) qui est alimenté en fluide sous pression à partir de l'espace de pression (10) et une chambre de retour (14) essentiellement sans pression qui est alimentée en fluide sous pression à partir de l'espace intermédiaire (12) et qui est connectée par le biais d'une connexion de retour (15) à un réservoir de fluide sous pression sans pression (16), un piston d'espace de pression (9) déplaçable axialement séparant l'espace de pression (10) de l'espace intermédiaire (12) et un piston d'espace intermédiaire (13) déplaçable axialement séparant l'espace intermédiaire (12) de la chambre de retour (14).

2. Dispositif de frein (1) selon la revendication 1, **caractérisé en ce qu'**une tige de piston (6) est reçue de manière déplaçable axialement dans l'étage d'amplificateur (2), laquelle est prévue pour le transfert d'une force d'actionnement d'une pédale de frein (7) au piston de cylindre de frein (5) et un dispositif de capteur (8) est prévu pour le contrôle direct ou indirect de la position axiale de la tige de piston (6).

3. Dispositif de frein (1) selon la revendication 1, **caractérisé en ce que** le piston d'espace intermédiaire (13) agit avec une force d'amplification sur le piston de cylindre de frein (5) lorsque du fluide hydraulique sous pression est alimenté avec une pression d'amplification dans l'espace de pression (10) à partir de l'unité de pompe à moteur (11).

4. Dispositif de frein (1) selon la revendication 1, **caractérisé en ce que** dans le mode d'actionnement autonome indépendant du conducteur, le piston d'espace de pression (9) est prévu de manière accouplée mécaniquement au piston d'espace intermédiaire (13) pour le transfert de la force d'amplification et dans le mode d'actionnement manuel, le piston d'espace intermédiaire (13) est désaccouplé mécaniquement du piston d'espace de pression (9) et la force d'amplification agit hydrauliquement à partir de l'espace intermédiaire (12) sur le piston d'espace intermédiaire (13).

5. Dispositif de frein (1) selon la revendication 2, **caractérisé en ce que** la tige de piston (6) est disposée axialement au moins en partie dans le piston d'espace de pression (9) et dans le piston d'espace intermédiaire (13).

6. Dispositif de frein (1) selon la revendication 2, **caractérisé en ce que** dans la tige de piston (6) est prévu au moins un premier passage hydraulique (18) qui s'étend en partie axialement à travers la tige de piston (6) et qui débouche avec au moins deux ouvertures espacées axialement l'une de l'autre dans la surface radiale de la tige de piston (6).

7. Dispositif de frein (1) selon la revendication 2, **caractérisé en ce qu'**un premier passage hydraulique (18) et un deuxième passage hydraulique (19) sont disposés dans la tige de piston (6), lesquels s'étendent à distance axiale l'un de l'autre en partie axialement à travers la tige de piston (6) et débouchent avec à chaque fois au moins deux ouvertures espacées axialement l'une de l'autre dans la surface radiale de la tige de piston (6).

8. Dispositif de frein (1) selon la revendication 6 ou 7, **caractérisé en ce qu'**une ouverture côté espace intermédiaire du premier passage hydraulique (18) est prévue en tant que première ouverture de commande (20) pour commander une connexion hydraulique entre l'espace de pression (10) et l'espace intermédiaire (12) à travers le premier passage hydraulique (18).

9. Dispositif de frein (1) selon la revendication 7, **caractérisé en ce qu'**une ouverture côté espace de pression du deuxième passage hydraulique (19) est prévue en tant que deuxième ouverture de commande (21) pour commander une connexion hydraulique entre l'espace intermédiaire (12) et la chambre de retour (14) à travers le deuxième passage hydraulique (19).

10. Dispositif de frein (1) selon la revendication 1, **caractérisé en ce que** le piston d'espace intermédiaire (13) est disposé de manière serrée axialement entre deux éléments de ressort.

11. Dispositif de frein (1) selon la revendication 10, **caractérisé en ce que** le piston d'espace intermédiaire (13), dans sa position de départ non actionnée, est pressé par un ressort de rappel (17) qui est précontraint par force lors d'une opération de freinage, contre le piston d'espace de pression (9) ou contre une butée fixée au boîtier d'amplificateur.

12. Dispositif de frein (1) selon la revendication 2, **caractérisé en ce qu'**entre le piston de cylindre de frein (5) et la tige de piston (6) est interposé fonctionnellement un élément de réaction élastique (23) qui, lors de l'actionnement manuel, est comprimé et introduit par la tige de piston (6) dans une pédale de frein (7), en formant une hystérésis, une force de réaction en tant qu'information haptique en retour.

13. Dispositif de frein (1) selon la revendication 2, **caractérisé en ce qu'**un élément de butée (24) est disposé sur la tige de piston (6), lequel limite un déplacement axial du piston d'espace de pression (9) dans la direction de l'espace intermédiaire (12) par rapport à la tige de piston (6) .
